# EUROPÄISCHE PATENTSCHRIFT

(11) **EP 2 410 198 B1**
(45) Veröffentlichungstag und Bekanntmachung des Hinweises auf die Patenterteilung: **02.07.2014**
(21) Anmeldenummer: 11173896.9
(22) Anmeldetag: 14.07.2011
(51) Int. Cl.: F16D 65/097, F16D 65/14, F16D 65/56

(54) **Scheibenbremse für ein Nutzfahrzeug**
Disc brake for a commercial vehicle
Frein à disque pour un véhicule utilitaire

(30) Priorität: 21.07.2010 DE 102010031704
(43) Veröffentlichungstag der Anmeldung: 25.01.2012
(73) Patentinhaber: KNORR-BREMSE Systeme für Nutzfahrzeuge GmbH, 80809 München (DE)
(72) Erfinder: Nesmjanowitsch, Igor, 94491 Hengersberg (DE)
(74) Vertreter: Mattusch, Gundula

(56) Entgegenhaltungen:
- EP-A1- 0 790 431
- EP-A2- 1 160 477
- WO-A2-2004/013510
- US-A- 5 819 884

## Beschreibung

Die Erfindung betrifft eine Scheibenbremse für ein Nutzfahrzeug nach dem Gattungsbegriff des Anspruchs 1.

Eine solche Scheibenbremse ist aus der DE 195 15 063 C1 sowie der EP 1 160 477 A2 (Fig. 1 - 6) bekannt. Bei dieser Konstruktion sind die Druckstücke als separate Bauteile an den beiden parallel und abständig zueinander angeordneten Stellspindeln angeschlossen.

Bei einer Bremsung erfolgt eine Betätigung der Zuspanneinrichtung, wobei die zuspannseitige Bremsbacke gegen die Bremsscheibe gedrückt wird.

Dieser Andruck erfolgt durch die beiden als Bremskolben wirkenden Stellspindeln über die Druckstücke, wobei die Stellspindeln andererseits in Funktion als Nachstellkolben Bestandteil von Nachstelleinrichtungen sind, mit denen ein Lüftspiel zwischen den Bremsbacken und der Bremsscheibe einstellbar ist.

Die Bremsbacken sind in Belagschächten eines fahrzeugseitigen Bremsträgers gehalten, an dem bei einer Schiebesattel-Scheibenbremse der Bremssattel, bezogen zur Drehachse der Bremsscheibe axial verschiebbar befestigt ist.

Dabei weist der Bremsträger jedem Belagschacht zugeordnet zwei Bremsträgerhörner auf, die eine seitliche Begrenzung für die jeweils einliegende Bremsbacke bilden, wobei diese Bremsträgerhörner beim Zuspannen der Bremsbacken gleichzeitig Führungsflächen bilden, an denen die jeweilige Bremsbacke mit einer einen Reibbelag tragenden Belagträgerplatte anliegt.

Bei einer Bremsung, wenn die Bremsbacken die rotierende Bremsscheibe im Sinne einer Abbremsung kontaktieren, kann es aufgrund des wirksamen Bremsmomentes zu einem Kippeln der Bremsbacken in den Belagschächten kommen, insbesondere da sich die Bremsträgerhörner in einem gewissen Maße verformen und sich der Belagschacht etwas aufweitet.

Dieses Kippeln führt unter Umständen zu einer Verdrehung der anliegenden Druckstücke und in der Folge zu einer unerwünschten Nachstellung der Stellspindeln, die als Gewinderohre im Bremssattel verdrehbar gelagert sind.

Durch das unerwünschte Nachstellen der Stellspindeln kommt es vielfach zu einem Heißlaufen der Bremse, da das vorhandene Lüftspiel überwunden wird und die Bremsbacke dauerhaft an der Bremsscheibe anliegt.

Das genannte Heißlaufen der Bremse insgesamt hat nicht nur einen erhöhten Verschleiß sowohl der Bremsscheibe wie auch der Bremsbacken zur Folge, sondern führt auch zu einer Verringerung der Standzeit anderer Bauteile, die einer erhöhten Temperaturbelastung unterliegen, was letztendlich sogar zu einem Versagen der Bremse führen kann.

In der DE 102 58 749 A1 ist eine Scheibenbremse geoffenbart, bei der zum Ausgleich eines verschleißbedingten Lüftspiels durch eine Nachstellrichtung betätigbare Nachstellelemente vorgesehen sind, die jedoch im Gegensatz zu denen einer gattungsgemäßen Scheibenbremse nicht verdrehbar, sondern verdrehfest gehalten sind, wobei an diesen verdrehfesten Nachstellelementen eine gemeinsame Verbindungsplatte befestigt ist, die als Wärmeschutz dient.

Auch in der DE 197 06 298 A1 ist eine solche Scheibenbremse gezeigt und beschrieben, bei der die die Druckstücke tragenden Nachstellelemente in Form von Schraubkörpern verdrehsicher gehalten sind und die ebenfalls durch eine Metallplatte als Hitzeschild miteinander verbunden sind.

Eine vergleichbare Konstruktion ist sowohl aus der DE 94 00 784 U1 wie auch aus der EP 1 160 477 A2 (Fig. 8 - 11) bekannt, bei der zwei parallel und abständig zueinander angeordnete Nachstellelemente als Druckstücke tragende Gewindebolzen ausgebildet sind, die zueinander verdrehfest durch eine Platte gehalten und in verdrehbaren Gewindehülsen gelagert sind.

Die bei einer gattungsgemäßen Scheibenbremse auftretenden, eingangs geschilderten Probleme einer unbeabsichtigten Verstellung der Stellspindeln ergeben sich aufgrund des unterschiedlichen Konstruktionsprinzips hier nicht, wobei allerdings diese Scheibenbremsen wesentlich komplizierter aufgebaut sind.

Der Erfindung liegt die Aufgabe zugrunde, eine Scheibenbremse der gattungsgemäßen Art so weiterzuentwickeln, dass ihre Funktionssicherheit erhöht und die Standzeit relevanter Bauteile optimiert wird.

Diese Aufgabe wird durch eine Scheibenbremse mit den Merkmalen des Anspruchs 1 gelöst.

Durch diese konstruktive Ausbildung der Scheibenbremse, die sich im Übrigen mit außerordentlich geringem fertigungstechnischen Aufwand realisieren lässt, wird eine unkontrollierte Verdrehung der Stellspinden verhindert, so dass die Nachstellung nur in vorbestimmten, durch eine Nachstelleinrichtung bewirkten Umfang gewährleistet ist.

Die zuvor zum Stand der Technik beschriebenen Nachteile, die sich durch die bislang mögliche Verdrehung der Druckstücke aufgrund des Belagkippelns beim Bremsen ergeben, werden nun vermieden, da die Bewegung der Bremsbacke ohne Einfluss auf das Druckstück und damit die angeschlossene Stellspindel bleibt.

Dabei kann die in Bremsstellung verdrehgesicherte Halterung der Druckstücke auf unterschiedliche Art und Weise erreicht werden.

So ist nach einer vorteilhaften Ausbildung der Erfindung vorgesehen, beide Druckstücke durch ein Koppelelement verdrehsicher zueinander miteinander zu verbinden.

Beispielsweise kann das Koppelelement in den der Stellspindel zugewandten rückseitigen Bereich des jeweiligen Druckstücks eingreifen, wobei das Koppelelement als Blechformteil ausgebildet sein kann, so dass eine einfache und kostengünstige Herstellung möglich ist.

Dies ist auch bei einer anderen Variante des Koppelelementes realisierbar, bei der es stirnseitig, d.h. druckflächenseitig an den beiden Druckstücken anliegt, wobei dieses Koppelelement mit den Druckstücken verklammert ist. In diesem Fall liegen also die Druckstücke nicht direkt an der Bremsbacke an, sondern über das Koppelelement.

Die erwähnte einfache und kostengünstige Herstellung ergibt sich vor allem aus der Herstellung des Koppelelementes als Stanzteil, das sehr einfach zu montieren ist.

Insbesondere dann, wenn das Koppelelement an den Druckflächen der Druckstücke anliegt, ist auch eine nachträgliche Montage in bereits verbauten Scheibenbremsen problemlos möglich, beispielsweise bei einem Bremsbackenwechsel.

Diese Ausführungsvariante, aber auch im gewissen Umfang die übrigen, bei entsprechender Konfiguration, können überdies als Hitzeschild wirken, so dass die in einem Aufnahmeraum des Bremssattels einliegenden Funktionsteile, wie die Zuspanneinrichtung, Faltenbälge zur Abdichtung zwischen den Druckstücken und dem Bremssattel oder dergleichen, vor zu starker Wärmeeinstrahlung geschützt werden. Insofern stellt ein solches Koppelelement ein sozusagen Multifunktionselement dar.

Weitere vorteilhafte Ausbildungen der Erfindung sind in den Unteransprüche gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer teilweise geschnittenen Draufsicht
- Figur 2: eine Einzelheit der Scheibenbremse in einer perspektivischen Ansicht
- Figur 3: einen Teil der Einzelheit nach Figur 2 in einer Draufsicht
- Figur 4: ein weiteres Ausführungsbeispiel der Erfindung in einer Draufsicht
- Figur 5: ein weiteres Ausführungsbeispiel der Erfindung als Einzelheit in perspektivischer Ansicht dargestellt
- Figur 6: eine Draufsicht auf ein Einzelteil der Erfindung in einer Draufsicht.

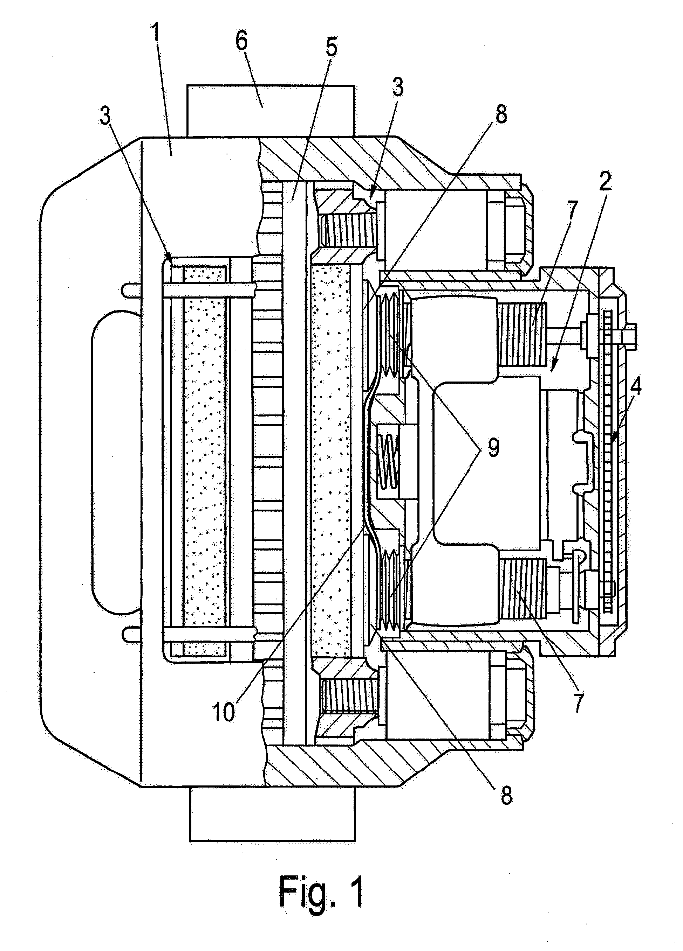

In der Figur 1 ist eine Scheibenbremse für ein Nutzfahrzeug dargestellt, mit einem Bremssattel 1 und einer darin angeordneten Zuspanneinrichtung 2 zum Andrücken von Bremsbacken 3 an eine Bremsscheibe 5.

Dabei werden zwei parallel und abständig zueinander angeordnete Stellspindeln 7, an deren der zugeordneten Bremsbacke 3 zugewandten Enden jeweils ein Druckstück 8 angeschlossen ist, mittels der Zuspanneinrichtung 2 gegen die Bremsbacke 3 gedrückt.

Die Stellspindeln 7 sind als Gewinderohre mit einem Außengewinde verdrehbar im Bremssattel 1 gelagert, wo sie mit einem Innengewinde des Bremssattels in Eingriff stehen und über eine Nachstelleinrichtung 4 betätigt werden, so dass eine verschleißbedingte Zunahme eines Lüftspiels, also des Spaltes zwischen der Bremsbacke 3 und der Bremsscheibe 5 ausgeglichen wird.

Zur Abdichtung eines Funktionsteile beherbergenden Aufnahmeraumes des Bremssattels 1 sind zwischen dem Austrittsbereich der Stellspindeln 7 und dem jeweils angeschlossenen Druckstück 8 Faltenbälge 9 angeordnet.

Erfindungsgemäß sind die Druckstücke 8 in Funktionsstellung der Scheibenbremse, wenn also die Bremsbacke 3 an die Bremsscheibe 5 gedrückt wird, verdrehsicher positioniert.

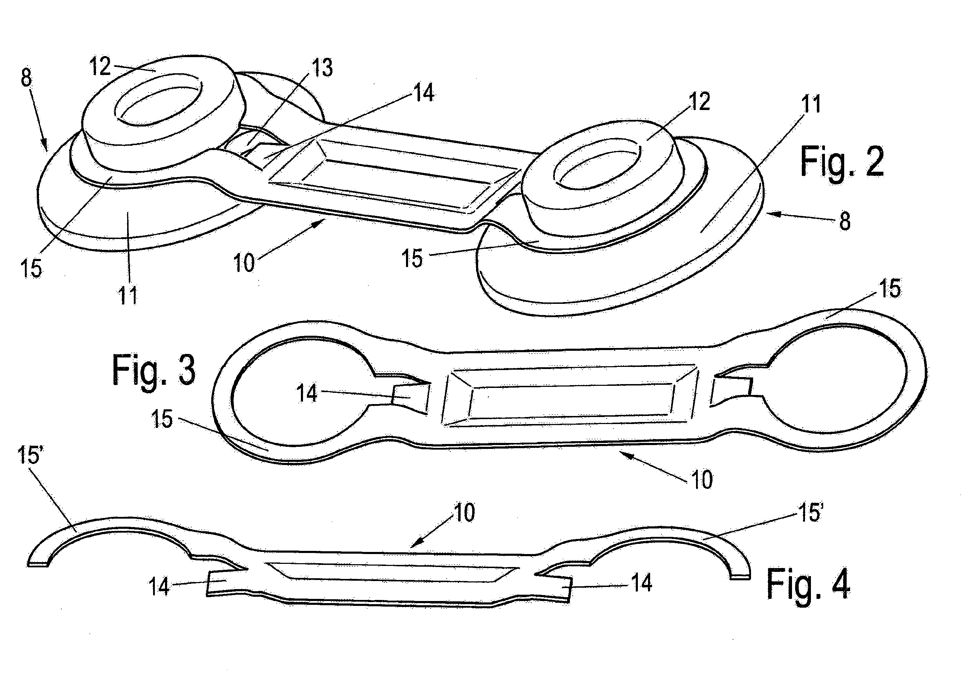

Hierzu ist ein die beiden Druckstücke 8 miteinander verbindendes Koppelelement 10 vorgesehen, das in den Figuren 2 und 3 als ein Ausführungsbeispiel dargestellt ist.

Dieses Koppelelement 10 ist als längliches Blechformteil ausgebildet, das an beiden Enden Ringe 15 aufweist, die einerseits am Rücken von Drucktellern 11 der Druckstücke 8 anliegen und Aufnahmen 12 der Druckstücke 8 umschließen, mit denen die Druckstücke 8 an der jeweils zugeordneten Stellspindel 7 angeschlossen sind.

Andererseits liegen die Faltenbälge 9 an den Ringen 15 zur axialen Sicherung des Koppelelementes 10 an.

Eine Verdrehsicherung beider Druckstücke 8 wird durch angeformte Zungen 14 des Koppelelementes 10 erreicht, die in Ausnehmungen 13 am Rücken der Druckteller 11 einliegen und so eine Sperre bilden.

Bei der in der Figur 4 gezeigten Ausführungsvariante liegt das Koppelelement 10 als etwa hälftiges Teil des in der Figur 3 gezeigten vor. Dabei sind endseitig Halbringe 15' angeformt, während die Zungen 14 entsprechend der in der Figur 3 gezeigten Ausführung ausgebildet sind.

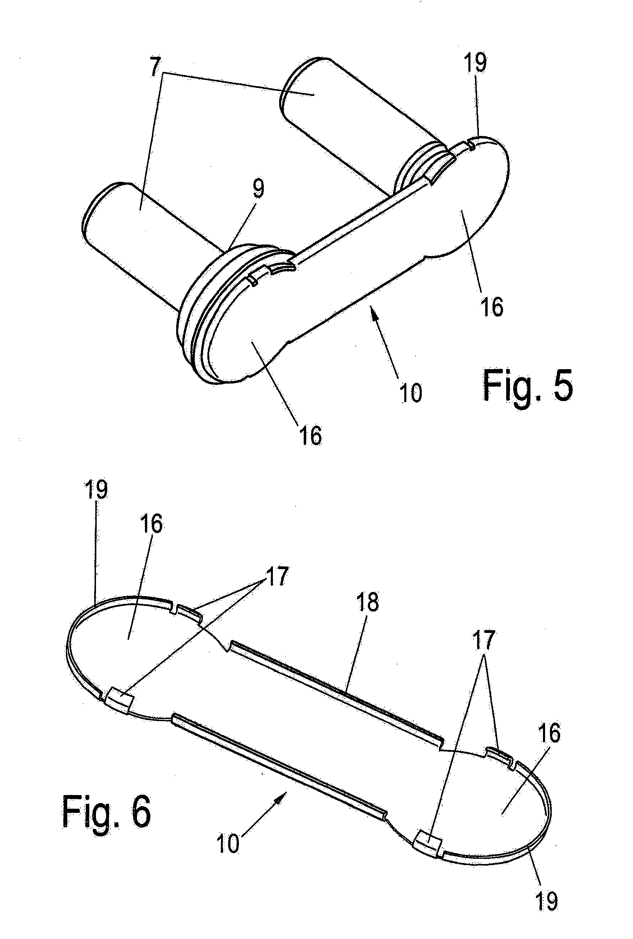

In den Figuren 5 und 6 ist ein weiteres Beispiel des Koppelelementes 10 erkennbar, das hier als längliche Blechplatte gestaltet ist und an beiden Enden Teller 16 aufweist, die, wie in der Figur 5 sehr deutlich zu erkennen ist, die die Druckflächen der Druckstücke 8 bildenden, der Bremsbacke 3 zugewandten Seiten vollständig überdecken, so dass zumindest die Teller 16 bei einem Andrücken vollflächig an der Bremsbacke 3 anliegen.

Zur Versteifung des Koppelelementes 10 sind an den die beiden Teller 16 miteinander verbindenden Mittelteil Rippen 18 angeformt.

Die Befestigung des Koppelelementes 10 an den beiden Druckstücken 8 erfolgt über Klemmlaschen 17, die die Druckteller 11 der Druckstücke 8 so weit übergreifen, dass eine ausreichende Fixierung des Koppelelementes 10 gewährleistet ist. Hierzu trägt auch eine umgebogene Kante 19 bei, die den jeweiligen Teller 16 außenseitig begrenzt und an der der Rand des Drucktellers 11 anliegt.

In jedem Fall ist gewährleistet, dass die von der Bremsbacke 3 ausgehenden beim Bremsen entstehenden Rotationsbewegungen nicht auf die Druckstücke 8 übertragen werden.

### Bezugszeichenliste

- 1: Bremssattel
- 2: Zuspanneinrichtung
- 3: Bremsbacke
- 4: Nachstelleinrichtung
- 5: Bremsscheibe
- 6: Bremsträger
- 7: Stellspindel
- 8: Druckstück
- 9: Faltenbalg
- 10: Koppelelement
- 11: Druckteller
- 12: Aufnahme
- 13: Ausnehmung
- 14: Zunge
- 15: Ring
- 15': Halbring
- 16: Teller
- 17: Klemmlasche
- 18: Rippe
- 19: Kante

## Patentansprüche

1. Scheibenbremse für ein Nutzfahrzeug, mit einem Bremssattel (1), in dem zwei, in Funktion gegen eine Bremsscheibe (5) pressbare Bremsbacken (3) angeordnet sind, von denen eine aktionsseitige mittels einer Zuspanneinrichtung (2) über zwei, als Gewinderohre mit Außengewinde ausgebildete, im Bremssattel (1) verdrehbar gelagerte Stellspindeln (7) und daran angeschlossene Druckstücke (8) an die Bremsscheibe (5) andrückbar ist, wobei die Stellspindeln (7) gegenüber den Druckstücken (8) frei drehbar sind, **dadurch gekennzeichnet, dass** die Druckstücke (8) in Funktionsstellung der Bremse verdrehsicher positioniert sind.

2. Scheibenbremse nach Anspruch 1, **dadurch gekennzeichnet, dass** beide Druckstücke (8) über ein Koppelelement (10) miteinander verbunden sind.

3. Scheibenbremse nach Anspruch 2, **dadurch gekennzeichnet, dass** das Koppelelement (10) formschlüssig mit den Druckstücken (8) in Eingriff ist.

4. Scheibenbremse nach einem der Ansprüche 2 oder 3, **dadurch gekennzeichnet, dass** das Koppelelement (10) als Blechformteil ausgebildet ist.

5. Scheibenbremse nach einem der Ansprüche 2 bis 4, **dadurch gekennzeichnet, dass** das Koppelelement (10) im Anschlussbereich an die Druckstücke (8) als Ring (15) oder Halbring (15') ausgebildet ist, der auf dem der Stellspindel (7) zugewandten Rückseite des Druckstückes (8) anliegt.

6. Scheibenbremse nach einem der Ansprüche 2 bis 5, **dadurch gekennzeichnet, dass** an der Rückseite des Druckstücks (8) eine Ausnehmung (13) vorgesehen ist, in die eine angeformte Zunge (14) des Koppelelementes (10) eingreift.

7. Scheibenbremse nach einem der Ansprüche 2 bis 6, **dadurch gekennzeichnet, dass** das Koppelelement (10) an den den Druckstücken (8) zugewandten Endbereichen als Teller (16) ausgebildet ist, die die der Bremsbacke (3) zugewandte Druckfläche jedes Druckstückes (8) überdecken.

8. Scheibenbremse nach Anspruch 7, **dadurch gekennzeichnet, dass** im Randbereich der Teller (16) Klemmlaschen (17) vorgesehen sind, mit denen das Koppelelement (10) an den Druckstücken (8) fixiert ist.

9. Scheibenbremse nach einem der Ansprüche 7 oder 8, **dadurch gekennzeichnet, dass** im Randbereich der Teller (16) eine in Richtung der Druckstücke (8) angeformte Kante (19) vorgesehen ist.

10. Scheibenbremse nach einem der Ansprüche 7 bis 9, **dadurch gekennzeichnet, dass** ein die Teller (16) verbindendes Mittelteil mit zumindest einer Rippe (18) zur Versteifung versehen ist.

## Claims

1. Disc brake for a commercial vehicle, comprising a brake calliper (1) in which are located two brake pads (3) which can be pressed against a brake disc (5) in operation, of which an action-side pad can be pushed against the brake disc (5) by means of an application device (2) via two actuating spindles (7) designed as threaded tubes having a male thread and rotatably mounted in the brake calliper (1) and via pressure pads (8) joined thereto, the actuating spindles (7) being freely rotatable relative to the pressure pads (8), **characterised in that** the pressure pads (8) are positioned non-rotatably in the functional position of the brake.

2. Disc brake according to claim 1, **characterised in that** the two pressure pads (8) are joined to one another via a coupling element (10).

3. Disc brake according to claim 2, **characterised in that** the coupling element (10) is in positive engagement with the pressure pads (8).

4. Disc brake according to claim 2 or 3, **characterised in that** the coupling element (10) is designed as a moulded sheet metal part.

5. Disc brake according to any of claims 2 to 4, **characterised in that** the coupling element (10) is, in the connecting region to the pressure pads (8), designed as a ring (15) or half-ring (15') which bears against the rear of the pressure pad (8) facing the actuating spindle (7).

6. Disc brake according to any of claims 2 to 5, **characterised in that** a recess (13) which is in engagement with an integral latch (14) of the coupling element (10) is provided at the rear of the pressure pad (8).

7. Disc brake according to any of claims 2 to 6, **characterised in that** the coupling element (10) is, in the end regions facing the pressure pads (8), designed as a disc (16) which covers the pressure face of each pressure pad (8), which faces the brake pad (3).

8. Disc brake according to claim 7, **characterised in that** clamping tabs (17) by means of which the coupling element (10) is secured to the pressure pads (8) are provided in the edge region of the discs (16).

9. Disc brake according to claim 7 or 8, **characterised in that** an edge (19) integrally formed in the direction of the pressure pads (8) is provided in the edge region of the discs (16).

10. Disc brake according to any of claims 7 to 9, **characterised in that** a central part connecting the discs (16) is provided with at least one rib (18) for stiffening.

## Revendications

1. Frein à disque pour un véhicule utilitaire, comprenant un étrier (1) de frein dans lequel sont montées deux mâchoires (3) de frein qui, en fonctionnement, peuvent être pressées sur un disque (5) de frein et dont l'une peut, du côté action? être, au moyen d'un dispositif de serrage, par deux broches (7) de réglage constituées en tube filetée à filetage extérieur et montées tournantes dans l'étrier (1) de frein et par deux pièces (8) d'application d'une pression qui s'y raccordent, appliquées sur le disque (5) de frein, les broches (7) de réglage pouvant tourner librement par rapport aux pièces (8) d'application d'une pression, **caractérisé en ce que** les pièces (8) d'application d'une pression sont, dans la position de fonctionnement du frein, mises en position sans possibilité de torsion.

2. Frein à disque suivant la revendication 1, **caractérisé en ce que** les deux pièces (8) d'application d'une pression sont reliées entre elles par un élément (10) d'accouplement.

3. Frein à disque suivant la revendication 2, **caractérisé en ce que** l'élément (10) d'accouplement est en prise à complémentarité de forme avec les pièces (8) d'application d'une pression.

4. Frein à disque suivant la revendication 2 ou 3, **caractérisé en ce que** l'élément (10) d'accouplement est constitué sous la forme d'une pièce conformée en tôle.

5. Frein à disque suivant l'une des revendications 2 à 4, **caractérisé en ce que** l'élément (10) d'accouplement est constitué dans la zone de raccordement aux pièces (8) d'application d'une pression sous la forme d'un anneau (15) ou d'un demi-anneau (15') qui s'applique au côté arrière, tourné vers les broches (7) de réglage, de la pièce (8) d'application d'une pression.

6. Frein à disque suivant l'une des revendications 2 à 5, **caractérisé en ce que** du côté arrière de la pièce (8) d'application d'une pression est prévu un évidemment (8) dans lequel pénètre une languette (14) conformée de l'élément (10) d'accouplement.

7. Frein à disque suivant l'une des revendications 2 à 6, **caractérisé en ce que** l'élément (10) d'accouplement est constitué dans les parties d'extrémité tournées vers les pièces (8) d'application d'une pression sous la forme d'une cuvette (16) qui recouvre la surface de pression, tournée vers la mâchoire (3) de frein, de chaque pièce (8) d'application d'une pression.

8. Frein à disque suivant la revendication 7, **caractérisé en ce qu'**il est prévu dans la partie de bord de la cuvette (16) des pattes (17) de serrage? par lesquelles l'élément (10) d'accouplement est immobilisé sur les pièces (8) d'application d'une pression.

9. Frein à disque suivant l'une des revendications 7 ou 8, **caractérisé en ce que** dans la partie de bord de la cuvette (16) est prévue une arête (19) conformée en direction des pièces (8) d'application d'une pression.

10. Frein à disque suivant l'une des revendications 7 à 9, **caractérisé en ce qu'**une partie médiane reliant les cuvettes (16) est pourvue, pour la rigidification, d'au moins une nervure (18).
